**Europäisches Patentamt**

**European Patent Office**

**Office européen des brevets**

(19)

(11) Veröffentlichungsnummer: **0 078 254**
**B1**

(12) # EUROPÄISCHE PATENTSCHRIFT

(45) Veröffentlichungstag der Patentschrift:
06.08.86

(51) Int. Cl.⁴: **C 22 C 38/18,** C 22 C 38/28,
C 22 C 38/26, C 22 C 38/32

(21) Anmeldenummer: **82890155.3**

(22) Anmeldetag: **27.10.82**

(54) **Verwendung eines Vergütungsstahls und Verbundstahlsäge.**

(30) Priorität: **28.10.81 AT 4582/81**

(43) Veröffentlichungstag der Anmeldung:
**04.05.83 Patentblatt 83/18**

(45) Bekanntmachung des Hinweises auf die Patenterteilung:
**06.08.86 Patentblatt 86/32**

(84) Benannte Vertragsstaaten:
**CH DE FR GB IT LI SE**

(56) Entgegenhaltungen:
**DE - B - 1 046 647**
**FR - A - 1 278 660**
**FR - A - 1 570 294**
**FR - A - 2 374 159**
**GB - A - 839 063**
**GB - A - 1 360 483**
**US - A - 2 683 086**

(73) Patentinhaber: **VEREINIGTE EDELSTAHLWERKE
AKTIENGESELLSCHAFT (VEW), Elisabethstrasse 12,
A-1010 Wien (AT)**

(72) Erfinder: **Eichler, Norbert, Leopold Weber Strasse 7,
A-3333 Böhlerwerk (AT)**

(74) Vertreter: **Widtmann, Georg, Dr., Vereinigte
Edelstahlwerke Aktiengesellschaft (VEW)
Elisabethstrasse 12, A-1010 Wien (AT)**

**Beschreibung**

Die Erfindung betrifft die Verwendung eines Vergütungsstahls als Grundwerkstoff von Verbundstählen mit Schnellarbeitsstahlauflage bzw. als Trägerwerkstoff von mit einem Schnellarbeitsstahlbereich ausgebildeten Verbundmetallbändern, und Sägebänder bzw. Sägeblätter mit einem derartigen Vergütungsstahl. Aus der GB-A 1 360 483 werden Stähle folgender Zusammensetzung bekannt:

C 0,35 bis 0,5, Si 0,10 bis 0,35, Mn 0,50 bis 0,80, Cr 0,8 bis 1,2, Mo 0,4 bis 1,5, V ≤ 0,3, Nb ≤ 0,06, B 0,0005 bis 0,005, Al ≤ 0,1, Rest Eisen sowie übliche Verunreinigungen. Aus diesem Stahl werden Kettenglieder, insbesondere für schwere Zugfahrzeuge hergestellt.

Aus der FR-A 1 570 294 ist die Anweisung zu entnehmen, einen Stahl folgender Zusammensetzung für Wellen von Turbinen zu verwenden:

C 0,15 bis 0,35, Si 0 bis 0,35, Mn 0,4 bis 1,0, Ni 0,4 bis 1,0, Cr 0,7 bis 1,4, Mo 0,5 bis 1,5, V 0,2 bis 0,6, Ti und/oder Nb und Ta 0,03 bis 0,15, B 0,002 bis 0,01, Co 0,5 bis 3,0, Rest Eisen.

Beim Einsatz eines Vergütungsstahles mit in Gew.-% C 0,3 bis 0,65, Si 0,10 bis 0,40, Mn 0,30 bis 1,0, Cr 0,8 bis 1,3 und zumindest einem der folgenden Legierungselemente Mo 0 bis 1,5, Ni 0 bis 1,5, V 0 bis 0,25, W 0 bis 1,5, Rest Fe und übliche Verunreinigungen für die eingangs genannten Verwendungszwecke ergibt sich die Schwierigkeit, dass sich die Härtetemperatur am jeweiligen Schnellstahltyp orientieren muss und demgemäss ungewöhnlich hoch ist. Dies führt dazu, dass insbesondere im Falle der Anwendung der mit einer relativ langen Aufheizperiode verbundenen Vakuumhärtung eine sehr starke Vergröberung des Vergütungsstahlgefüges eintritt, die mit einer starken Versprödung verbunden ist. Die erwähnten Nachteile können sich so stark auswirken, dass die angestrebte Verwendung gar nicht in Betracht kommt, weil sich die Sprödigkeit des Grund- bzw. Trägerwerkstoffes als untragbar hoch erweist.

Aufgabe der Erfindung ist die Lösung dieses technischen Problems und es hat sich überraschenderweise gezeigt, dass es gelingt, diese Lösung durch bestimmte legierungstechnische Massnahmen zu erreichen.

Die Erfindung besteht in der Verwendung eines Vergütungsstahls als Grundwerkstoff von Verbundstählen mit Schnellarbeitsstahlauflage bzw. als Trägerwerkstoff von mit einem Schnellarbeitsstahlbereich ausgebildeten Bimetallbändern mit in Gew.-% C 0,30 bis 0,65, Si 0,10 bis 0,40, Mn 0,30 bis 1,0, Cr 0,80 bis 1,30, zumindest einer der folgenden Legierungselemente: Mo 0 bis 1,5, Ni 0 bis 1,5, V 0 bis 0,25, W 0 bis 1,5 und als Mikrolegierungselemente Ti 0,03 bis 0,15 und/oder Nb 0,03 bis 0,15, ferner B 0,005 bis 0,02 und/oder Al 0,02 bis 0,1, Rest Fe mit erschmelzungsbedingten Verunreinigungen.

Das erfindungsgemässe Verbundstahlsägeband bzw. -sägeblatt mit einem Trägerwerkstoff aus Vergütungsstahl und einer Schnellstahlauflage für den Zahnungsbereich besteht im wesentlichen darin, dass der Vergütungsstahl in Gew.-% aus C 0,30 bis 0,65, Si 0,10 bis 0,40, Mn 0,30 bis 1,0, Cr 0,80 bis 1,30 und zumindest einem der folgenden Legierungselemente: Mo 0 bis 1,5, Ni 0 bis 1,5, V 0 bis 0,25, W 0 bis 1,5 und den Mikrolegierungselementen Ti 0,03 bis 0,15 und/oder Nb 0,03 bis 0,15 ferner B 0,005 bis 0,02 und/oder Al 0,02 bis 0,1, Rest Fe mit erschmelzungsbedingten Verunreinigungen, besteht.

Eine besonders gute Abstimmung bezogen auf Härtetemperatur und geringe Kornvergröbung liegt bei einem erfindungsgemässen Verbundstahl-Sägeband bzw. -Sägeblatt vor, wenn die Schnellstahlauflage in Gew.-% aus C 0,80 bis 1,40, Si max. 0,45, Mn max. 0,40, Cr 3,5 bis 5,0, Mo 2,5 bis 10, V 1,0 bis 3,5, W 1,3 bis 10,5 und gegebenenfalls Co bis 11, Rest Fe und erschmelzungsbedingte Verunreinigungen besteht.

Die Erfindung wird nachstehend an Hand von Ausführungsbeispielen näher erläutert:

Beispiel 1:

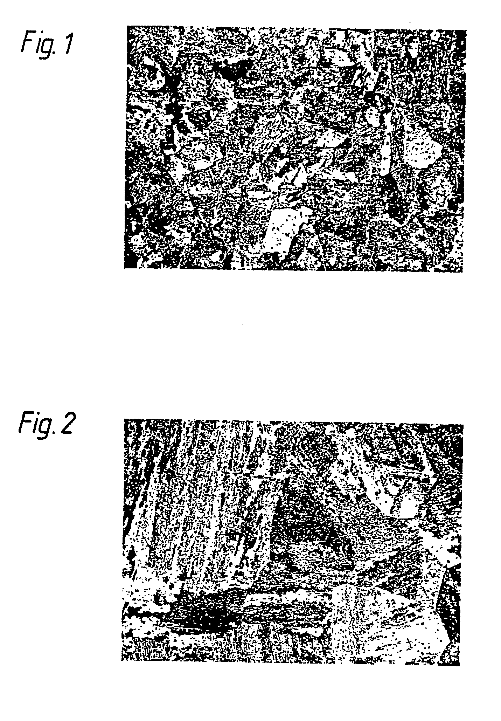

Für die Herstellung von Stichsägeblättern wurde ein 0,8 mm dickes und 1,6 mm breites Schnellarbeitsstahlband der Zusammensetzung 1,10% C, 0,26% Si, 0,28% Mn, 4,10% Cr, 9,20% Mo, 1,13% V, 1,45% W, 7,70% Co, Rest Fe und erschmelzungsbedingte Verunreinigungen mit einem bandförmigen Trägerwerkstoff aus dem erfindungsgemässen Vergütungsstahl mit 0,40% C, 0,38% Si, 0,78% Mn, 1,12% Cr, 0,80% Mo, 0,04% Ti, 0,07% Nb, 0,01% B, 0,025% Al, Rest Fe und erschmelzungsbedingte Verunreinigungen durch eine Elektronenstrahlschweissung verbunden. Das auf diese Weise hergestellte, 16 mm breite und 0,8 mm dicke Bimetallband wurde entsprechend abgelängt, die Sägenzahnung im Schnellstahlbereich hergestellt und die Härtung in einem Vakuum-Härteofen nach Einspannen in eine Serien-Spannvorrichtung bei einer Härtetemperatur von 1200 °C vorgenommen. Die Ofenzeit betrug dabei 3 Stunden und es war bekannt, dass bei Bimetallsägeblättern praktisch analoger Zusammensetzung, jedoch ohne den Gehalt der erfindungsgemäss vorgeschriebenen Mikrolegierungselemente unter diesen Härtungsbedingungen (Ölbadhärtung) ein stark überhitztes Gefüge, dementsprechend eine Korngrösse nach ASTM von 0 bis 1, eine Härte von etwa 800 $HV_5$ und ein spröder Bruch festzustellen war. Im Gegensatz dazu wurde mit dem erfindungsgemässen Vergütungsstahl als Trägerwerkstoff bei der Überprüfung das in Fig. 1 mit einer Vergrösserung von 100:1 dargestellte Härtungsgefüge, eine Korngrösse nach ASTM von 4 bis 5 mit einer Härte von 760 $HV_5$ und ein zäher Bruch erreicht.

In Fig. 2 ist zum Vergleich das mit dem erwähnten Vergleichsstahl sich unter analogen Bedingungen ergebende Härtungsgefüge mit derselben Vergrösserung gezeigt.

Die Sägeblätter wurden zweimal bei 550 °C jeweils eine Stunde lang angelassen und danach durch einen Zugversuch die mechanischen Werte ermittelt, die in der folgenden Tabelle jeweils in der rechten Spalte den Werten (linke Spalte) ge-

Tabelle:

| Wärme-behandlung | HV$_5$ | | Zugfestigkeit N/mm² | | Streckgrenze N/mm² | | Dehnung (5d) % | |
|---|---|---|---|---|---|---|---|---|
| 1200°C/Öl | 517 | 528 | 1631 | 1641 | 1460 | 1471 | 3 | 6 |
| 2 × 550°C | 515 | 530 | 1636 | 1647 | 1462 | 1470 | 3 | 6 |

genübergestellt sind, die mit dem Vergleichsstahl erhalten wurden.

Die Werte zeigen auf, dass sogar bei etwas erhöhter Härte eine wesentliche Erhöhung der Zähigkeit erreicht werden konnte.

Beispiel 2:

Zur Herstellung eines Nagelgesenkes für die Fabrikation von Schwellennägeln (4kantige Nägel, in deren flachem Kopf bei der Herstellung jeweils die Jahreszahl eingestanzt wird) wurde durch Warmwalzen ein Verbundstahl aus den folgenden Werkstoffen gebildet. Die 20 mm dicke Schnellstahlauflage bestand aus einem Schnellstahl mit 0,90% C, 0,32% Si, 0,21% Mn, 4,85% Cr, 5,70% W, 5,10% Mo, 1,98% V, Rest Fe und erschmelzungsbedingte Verunreinigungen; der etwa 30 mm dicke Grundwerkstoff bestand aus einem erfindungsgemässen Vergütungsstahl mit 0,35% C, 0,25% Si, 0,34% Mn, 0,85% Cr, 0,80% Ni, 0,10% V, 0,07% Ti, 0,0018% B, 0,07% Al, Rest Fe und erschmelzungsbedingte Verunreinigungen.

Zu erwähnen ist, dass sich bei ausschliesslich aus Schnellarbeitsstahl hergestellten derartigen Nagelgesenken eine sehr ausgeprägte Tendenz zur Rissbildung u. zw. einerseits schon bei der von einer Härtetemperatur von 1180 °C ausgehenden Ölhärtung und andererseits im Verlaufe der Anwendung dieser Gesenke gezeigt hatte.

Mit der beschriebenen erfindungsgemässen Werkstoff-Kombination konnte dieses Problem jedoch sehr vorteilhaft gelöst und zudem eine Werkstoff-Ersparnis erzielt werden, indem die Rissbildungstendenz bei der Härtung beseitigt und eine wesentliche Standzeitverbesserung dieser Nagelgesenke bei der Fertigung der Nägel erreicht werden konnte. Die Überprüfung des Gefügezustandes ergab Korngrössenverhältnisse im zähharten Grundwerkstoff praktisch analog wie bei denen des Beispieles 1.

**Patentansprüche**

1. Verwendung eines Vergütungsstahls als Grundwerkstoff von Verbundstählen mit Schnellarbeitsstahlauflage bzw. als Trägerwerkstoff von mit einem Schnellarbeitsstahlbereich ausgebildeten Bimetallbändern mit in Gew.-% C 0,30 bis 0,65, Si 0,10 bis 0,40, Mn 0,30 bis 1,0, Cr 0,80 bis 1,30, zumindest einem der folgenden Legierungselemente: Mo 0 bis 1,5, Ni 0 bis 1,5, V 0 bis 0,25, W 0 bis 1,5 und als Mikrolegierungselemente Ti 0,03 bis 0,15 und/oder Nb 0,03 bis 0,15, ferner B 0,005 bis 0,02 und/oder Al 0,02 bis 0,1, Rest Fe mit erschmelzungsbedingten Verunreinigungen.

2. Verbundstahl-Sägeband bzw. -Sägeblatt, mit einem Trägerwerkstoff aus Vergütungsstahl und einer Schnellstahlauflage für den Zahnungsbereich, dadurch gekennzeichnet, dass der Vergütungsstahl in Gew.-% aus C 0,30 bis 0,65, Si 0,10 bis 0,40, Mn 0,30 bis 1,0, Cr 0,80 bis 1,30 und zumindest einem der folgenden Legierungselemente: Mo 0 bis 1,5, Ni 0 bis 1,5, V 0 bis 0,25, W 0 bis 1,5 und den Mikrolegierungselementen Ti 0,03 bis 0,15 und/oder Nb 0,03 bis 0,15, ferner B 0,005 bis 0,02 und/oder Al 0,02 bis 0,1, Rest Fe mit erschmelzungsbedingten Verunreinigungen, besteht.

3. Verbundstahl-Sägeband bzw. -Sägeblatt nach Anspruch 2, dadurch gekennzeichnet, dass die Schnellstahlauflage in Gew.-% aus C 0,80 bis 1,40, Si max. 0,45, Mn max. 0,40, Cr 3,5 bis 5,0, Mo 2,5 bis 10, V 1,0 bis 3,5, W 1,3 bis 10,5 und gegebenenfalls Co bis 11, Rest Fe und erschmelzungsbedingte Verunreinigungen, besteht.

**Claims**

1. The use of a heat-treatable steel as the basic material of composite steels with a high-speed steel layer or as the carrier material of bimetallic strips formed with a high-speed steel area, with, in percentages by weight, from 0.30 to 0.65 C, from 0.10 to 0.40 Si, from 0.30 to 1.0 Mn, from 0.80 to 1.30 Cr, at least one of the following alloy elements: from 0 to 1.5 Mo, from 0 to 1.5 Ni, from 0 to 0.25 V, from 0 to 1.5 W and, as microalloy elements, from 0.03 to 0.15 Ti and/or from 0.03 to 0.15 Nb, and in addition from 0.005 to 0.02 B and/or from 0.02 to 0.1 Al, the rest Fe with impurities due to smelting.

2. A composite saw band or saw blade, with a carrier material of heat-treatable steel and a high-speed steel layer for the toothing area, characterized in that the heat-treatable steel consists, in percentages by weight, of from 0.30 to 0.65 C, from 0.10 to 0.40 Si, from 0.30 to 1.0 Mn, from 0.80 to 1.30 Cr, at least one of the following alloy elements: from 0 to 1.5 Mo, from 0 to 1.5 Ni, from 0 to 0.25 V, from 0 to 1.5 W and the microalloy elements from 0.03 to 0.15 Ti and/or from 0.03 to 0.15 Nb, and in addition from 0.005 to 0.02 B and/or from 0.02 to 0.1 Al, the rest Fe with impurities due to smelting.

3. A composite saw band or saw blade according to Claim 2, characterized in that the high-speed steel layer consists, in percentages by weight, of from 0.80 to 0.40 C, max. 0.45 Si, max. 0.40 Mn, from 3.5 to 5.0 Cr, from 2.5 to 10 Mo, from 1.0 to 3.5 V, from 1.3 to 10.5 W and where appropriate up to 11 Co, the rest Fe with impurities due to smelting.

## Revendications

1. Utilisation d'un acier de traitement comme matériau de base d'aciers composites avec revêtement d'acier à coupe rapide ou comme support de bandes bimétalliques présentant une partie en acier à coupe rapide, comportant, en pourcentage en poids, 0,30 à 0,65 de C, 0,10 à 0,40 de Si, 0,30 à 1,0 de Mo, 0,80 à 1,30 de Cr, au moins l'un des éléments d'alliage suivants: 0 à 1,5 de Mo, 0 à 1,5 de Ni, 0 à 0,25 de V, 0 à 1,5 de W et, comme micro-éléments d'alliage, 0,03 à 0,15 de Ti et/ou 0,03 à 0,15 de Nb, de plus 0,005 à 0,02 de B et/ou 0,02 à 0,10 d'Al, le reste en fer avec les impuretés habituelles d'élaboration.

2. Ruban de scie ou lame de scie en acier composite ayant un support en acier de traitement et un revêtement d'acier à coupe rapide pour la zone de denture, caractérisé en ce que l'acier de traitement est constitué, en pourcentage en poids, de 0,30 à 0,65 de C, 0,10 à 0,40 de Si, 0,30 à 1,0 de Mn, 0,80 à 1,30 de Cr, et au moins de l'un des éléments d'alliage suivants: 0 à 1,5 de Mo, 0 à 1,5 de Ni, 0 à 0,25 de V, 0 à 1,5 de W et des micro-éléments d'alliage suivants: 0,03 à 0,15 de Ti et/ou 0,03 à 0,15 de Nb, ainsi que de 0,005 à 0,02 de B et/ou 0,02 à 0,1 d'Al, le reste en fer, avec les impuretés d'élaboration habituelles.

3. Ruban de scie ou lame de scie en acier composite selon la revendication 2, caractérisé en ce que la couche de revêtement d'acier à coupe rapide comprend en pourcentage en poids 0,80 à 1,40 de C, au maximum 0,45 de Si, au maximum 0,40 de Mn, 3,5 à 5,0 de Cr, 2,5 à 10 de Mo, 1,0 à 3,5 de V, 1,3 à 10,5 de W et éventuellement jusqu'à 11 de Co, le reste en fer avec les impuretés habituelles d'élaboration.

*Fig. 1*

*Fig. 2*